# EUROPÄISCHE PATENTSCHRIFT

(11) **EP 0 699 815 B1**
(45) Veröffentlichungstag und Bekanntmachung des Hinweises auf die Patenterteilung: **10.06.1998**
(21) Anmeldenummer: 95113612.6
(22) Anmeldetag: 30.08.1995
(51) Int. Cl.: E05D 5/02, F16B 37/04

(54) **Klemmvorrichtung zum Befestigen eines Beschlagteils und Verfahren zur Herstellung einer derartigen Klemmvorrichtung**
Clamping device for mounting a fitting element and method for manufacturing such a clamping device
Dispositif de fixation par serrage pour la fixation d'une pièce de ferrure et procédé de fabrication d'un tel dispositif de fixation par serrage

(30) Priorität: 02.09.1994 DE 9414237 U; 02.09.1994 DE 4431278
(43) Veröffentlichungstag der Anmeldung: 06.03.1996
(60) Teilanmeldung: 97111881.5
(73) Patentinhaber: ROTO FRANK Aktiengesellschaft, 70771 Leinfelden-Echterdingen (DE)
(72) Erfinder: Röder, Erwin, D-73340 Amstetten (DE); Striggow, Uwe, D-70794 Filderstadt (DE)
(74) Vertreter: KOHLER SCHMID + PARTNER

(56) Entgegenhaltungen:
- EP-A- 0 528 213
- DE-A- 2 317 880
- DE-U- 1 957 655
- DE-U- 9 100 094

## Beschreibung

Die Erfindung betrifft eine Klemmvorrichtung zum Befestigen eines Beschlagteils an einer wenigstens eine Hinterschneidung aufweisenden Nut am Rahmen eines Fensters, einer Tür oder dergleichen, wobei die Nutöffnung von wenigstens einem mit Abstand vom Nutgrund angeordneten Quersteg begrenzt ist, mit einem an der dem Nutgrund zugewandten Unterseite des Querstegs abstützbaren Klemmstück, welches über einen Kupplungssteg an wenigstens einer an der dem Klemmstück abgewandten Seite des Querstegs abstützbaren Befestigungsplatte od. dgl. relativ zu dieser schwenkbar gelagert ist, wobei Anlenkstellen des Kupplungsstegs an dem Klemmstück und an der Befestigungsplatte vorgesehen sind und der Kupplungssteg gegenüber diesen Teilen geneigt angeordnet und zumindest begrenzt schwenkbeweglich ist und wobei die Befestigungsplatte gegen das Klemmstück mittels einer Spannvorrichtung spannbar ist, die eine eine Durchgangsbohrung der Befestigungsplatte an letzterer abstützbar durchsetzende und in eine Aufnahmeausnehmung des Klemmstücks eindrehbare Spannschraube umfaßt.

An Rahmen von Fenstern, Türen oder dergleichen, welche mit mindestens einer hinterschnittenen Beschlagteilnut versehen sind, werden Beschlagteile üblicherweise mittels einer Klemmbefestigung angebracht. Zu diesem Zweck wird ein Klemmstück in die hinterschnittene Beschlagteilnut eingebracht und an der gewünschten Stelle, sich mit einer die Nutöffnung außen übergreifenden Befestigungsplatte des Beschlagteils deckend, ausgerichtet. Dabei ist der die Nutöffnung begrenzende Quersteg bzw. sind die die Nutöffnung begrenzenden Querstege zwischen dem Klemmstück und der Befestigungsplatte angeordnet. Durch eine Bohrung der Befestigungsplatte wird eine Spannschraube in eine Gewindebohrung am Klemmstück eingedreht. Klemmstück und Befestigungsplatte werden durch Anziehen der Spannschraube gegeneinander bewegt und beaufschlagen schließlich den Quersteg bzw. die Querstege der Beschlagteilnut von einander gegenüberliegenden Seiten. Mittels der sich dadurch ergebenden Klemmverbindung wird das Beschlagteil kraftschlüssig am betreffenden Fenster- oder Türrahmen festgelegt. Zur Montagevereinfachung ist das Klemmstück bereits in der Ausgangslage der Klemmvorrichtung, also noch vor dem Einbringen des Klemmstücks in die Beschlagteilnut, mittels der nicht angezogenen Spannschraube an der Befestigungsplatte vormontiert.

Eine gattungsgemäße Klemmvorrichtung ist aus der Druckschrift DE-U-91 00 094 bekannt. Dabei erstrecken sich zwei Kupplungsstege in Form von Verbindungsstegen, welche der Verbindung eines Klemm- bzw. Gleitstücks mit einer als Druckstück ausgebildeten Befestigungsplatte dienen, ausgehend von den in Längsrichtung einer Beschlagteilnut weisenden Stirnflächen der beiden genannten Bauteile. Die Verbindungsstege stehen bei zwischen dem Gleitstück und dem Druckstück hergestellter Verbindung bogenartig über deren Stirnflächen vor. Die von den Verbindungsstegen gebildeten Bögen liegen dabei außerhalb der Beschlagteilnut. Dementsprechend ist es bei dem beschriebenen Stand der Technik nicht möglich, ein weiteres Beschlagteil unmittelbar benachbart zu der vorbekannten Klemmvorrichtung in der Beschlagteilnut anzubringen.

Die Vorveröffentlichung EP-A-0 528 213 offenbart eine Klemmvorrichtung, die anders als die gattungsgemäße Klemmvorrichtung keinen gegenüber einem Klemmstück schwenkbeweglichen Kupplungssteg aufweist.

Ausgehend von dem Stand der Technik nach DE-U-91 00 094 liegt der Erfindung vorrichtungsbezogen die Aufgabe zugrunde, eine Klemmvorrichtung zu schaffen, deren Kupplungssteg in Einbaulage verdeckt angeordnet ist. Verfahrensbezogen hat sich die Erfindung zum Ziel gesetzt, ein Verfahren zur Herstellung einer erfindungsgemäßen Klemmvorrichtung bereitzustellen.

Die vorrichtungsbezogene Aufgabe wird erfindungsgemäß dadurch gelöst, daß an einer Klemmvorrichtung der eingangs genannten Art die Anlenkstellen des Kupplungsstegs an dem Klemmstück und an der Befestigungsplatte an deren einander zugewandten Seiten im Bereich innerhalb der Weite der Nutöffnung angeordnet sind und der Kupplungssteg mit einem Durchbruch für die Spannschraube versehen ist, welcher Durchbruch in Einbaulage der Klemmvorrichtung mit der Durchgangsbohrung der Befestigungsplatte und mit der als Gewindebohrung ausgeführten Aufnahmeausnehmung korrespondiert. Auch in der Montagelage, in der das Klemmstück lediglich noch durch den Quersteg bzw. durch die Querstege von der Befestigungsplatte getrennt ist und der Kupplungssteg nahezu parallel zu Befestigungsplatte und Klemmstück ausgerichtet sein kann, liegt der Kupplungssteg im Innern der Nutöffnung. Die Anordnung der Anlenkstellen des Kupplungsstegs im Bereich innerhalb der Nutöffnung sorgt außerdem auch dafür, daß das Klemmstück durch den Kupplungssteg nicht behindert in die Beschlagteilnut eingeschoben werden kann. Die als solche bekannte geneigte Anordnung des Kupplungsstegs ist insbesondere im Hinblick auf eine baueinheitliche Herstellung der Klemmvorrichtung mittels Strangpressens sinnvoll. Beim Verschwenken von Klemmstück und Befestigungsplatte relativ zueinander werden die beiden Teile in bekannter Art und Weise bei der Montage, insbesondere bei Betätigung der Spannvorrichtung und der damit verbundenen Bewegung gegen den zugeordneten Quersteg relativ zueinander auf einer definierten Bahn in die Montage-Sollstellung geführt. Ein unerwünschtes Spiel des Klemmstücks, das bis hin zu dessen Verkanten führen könnte, wird vermieden.

Zur Verbesserung der Schwenkbeweglichkeit des Klemmstücks gegenüber der Befestigungsplatte ist im Falle einer bevorzugten Ausführungsform der erfindungsgemäßen Klemmvorrichtung vorgesehen, daß der Kupplungssteg am Übergang zur Befestigungsplatte und/oder zum Klemmstück mit einer Querschnittsschwächung versehen ist. Diese Maßnahme verleiht dem Klemmstück und der Befestigungsplatte auch bei Verwendung verhältnismäßig spröden Materials eine hinlängliche Beweglichkeit relativ zueinander. Der Bereich der Querschnittsschwächung wirkt als Gelenkstelle, durch deren Vorhandensein eine vorzeitige Rißbildung an den beim Relativverschwenken von Klemmstück und Befestigungsplatte beanspruchten Vorrichtungszonen vermieden wird.

Die als Gelenkstelle fungierende Querschnittsschwächung ist vorteilhafterweise durch eine im Kupplungssteg vorgesehene Ausnehmung von halbkreisförmigem Querschnitt gebildet. Auf diese Art und Weise wird eine Kerbwirkung am Übergangsbereich zwischen Kupplungssteg und Klemmstück bzw. zwischen Kupplungssteg und Befestigungsplatte vermieden.

Aus Gründen der Herstellungsvereinfachung ist erfindungsgemäß vorgesehen, daß der Kupplungssteg materialeinheitlich mit dem Klemmstück und der Befestigungsplatte hergestellt ist. Dadurch wird die Möglichkeit eröffnet, die genannten Bauteile in Baueinheit und in einem einzigen Arbeitsgang zu fertigen.

Dabei empfiehlt es sich, den Kupplungssteg, das Klemmstück und die Befestigungsplatte einstückig als Strangpreßprofil herzustellen. Der Kupplungssteg läßt sich gemeinsam mit Befestigungsplatte und Klemmstück durch einen Extrudiervorgang fertigen. Infolgedessen bilden die genannten Einzelteile von der Herstellung an einen einstückigen, materialeinheitlichen Bauelementesatz. Dementsprechend sind erfindungsgemäß nicht mehr verschiedene Bauteile getrennt herzustellen und anschließend zusammenzufügen. Darüber hinaus kann auch die auf die Herstellung folgende Nachbearbeitung von Kupplungssteg, Klemmstück und Befestigungsplatte parallelisiert werden. Für den Verarbeiter ist der Einbau der Klemmvorrichtung in die hinterschnittene Beschlagteilnut durch das Zusammenhängen der Vorrichtungskomponenten vereinfacht.

An einer in der Herstellung besonders einfachen Klemmvorrichtung bildet der Kupplungssteg gemeinsam mit dem Klemmstück und der Befestigungsplatte einen Bauelementesatz, welcher von einem Profilstrang abgelängt ist. Mit einem Schnitt sind die Einzelteile in Baueinheit von einem langen Profilstrang abgetrennt.

In zweckmäßiger Ausgestaltung der Erfindung ist der Kupplungssteg ebenso wie das Klemmstück und die Befestigungsplatte aus einer Aluminiumlegierung hergestellt.

Einer zwangsweise exakten Ausrichtung der Klemmvorrichtung an der betreffenden Beschlagteilnut dient es, daß, wie in Weiterbildung der Erfindung vorgesehen, an der Befestigungsplatte wenigstens ein Zentrieransatz zum Zusammenwirken mit einer zugeordneten Stirnfläche des Querstegs an der Nutöffnung vorgesehen ist. So wird mittels des Zentrieransatzes sichergestellt, daß die Baueinheit aus Kupplungssteg, Befestigungsplatte und Klemmstück sowohl während des Einbringens des Klemmstücks in die hinterschnittene Beschlagteilnut als auch danach am Fenster- oder Türrahmen korrekt ausgerichtet ist.

Die eingangs genannte verfahrensbezogene Aufgabe wird erfindungsgemäß dadurch gelöst, daß im Laufe eines Verfahrens zur Herstellung einer erfindungsgemäßen Klemmvorrichtung der Kupplungssteg, die Befestigungsplatte und das Klemmstück durch eine gemeinsame Düse zusammenhängend und materialeinheitlich in Form eines Profilstrangs stranggepreßt werden, daß vor oder nach dem anschließenden Abtrennen von aus einem Kupplungssteg, einer Befestigungsplatte und einem Klemmstück bestehenden Bauelementesätzen vom Profilstrang dieser bzw. die Bauelementesätze in diejenige Lage gebracht wird bzw. werden, in welcher der Kupplungssteg, die Befestigungsplatte und das Klemmstück bzw. die für diese Bauteile vorgesehenen Teile des Profilstrangs in etwa ihre Einbaulage zueinander einnehmen und daß dann für jeden Bauelementesatz in der Befestigungsplatte die insbesondere mit einer Senkung versehene Durchgangsbohrung für die Spannschraube der Klemmvorrichtung, im Klemmstück die Gewindebohrung für die Spannschraube und im Kupplungssteg der Durchbruch für die Spannschraube hergestellt und abschließend die Spannschraube eingedreht wird. Auch im Hinblick auf das beschriebene Herstellungsverfahren ist die Verschwenkbarkeit von Kupplungssteg, Befestigungsplatte und Klemmstück von Bedeutung. Sie erlaubt nämlich, den Rohling der Bauelementesätze ohne weiteres in eine Position zu überführen, in der die Einzelteile der Klemmvorrichtung ihre Montagelage zueinander einnehmen und in der die genannten Bohrungen und Durchbrüche, die in Einbaulage miteinander fluchten müssen, auf einfache Art und Weise hergestellt werden können. Das Eindrehen der Spannschraube kann alternativ auch als Teil der Montage erst am Montageort vorgenommen werden.

Bei einer besonders vorteilhaften Variante des erfindungsgemäßen Verfahrens werden die Durchgangsbohrung, die Gewindebohrung und der Durchbruch für die Spannschraube in einem Arbeitsgang gefertigt. Von Vorteil ist weiterhin die Fertigung der genannten Bohrungen sowie des Durchbruchs für die Spannschraube mit einem einzigen Werkzeug.

Im Sinne der Erfindung sind nach dem Extrudieren des Profilstrangs lediglich noch zwei Bearbeitungsschritte erforderlich, nämlich das Ablängen der Bauelementesätze vom Profilstrang und vorher oder nachher die gemeinsame Fertigung der Bohrungen bzw. des Durchbruchs für die Spannschraube. Zur montagegerechten Vervollständigung des Beschlagelementesatzes ist anschließend lediglich noch die Spannschraube in die zugeordnete Gewindebohrung des Klemmstücks einzudrehen.

Die Erfindung wird nachfolgend anhand beispielhafter schematischer Darstellungen näher erläutert. Es zeigen:
- Fig. 1: eine perspektivische Darstellung einer an einem Fenster montierten Klemmvorrichtung,
- Fig. 2: einen Profilstrang zur Herstellung einer Klemmvorrichtung unmittelbar nach dem Strangpressen im Querschnitt und
- Fig. 3: den Profilstrang nach Figur 2 in der Bearbeitungsstellung.

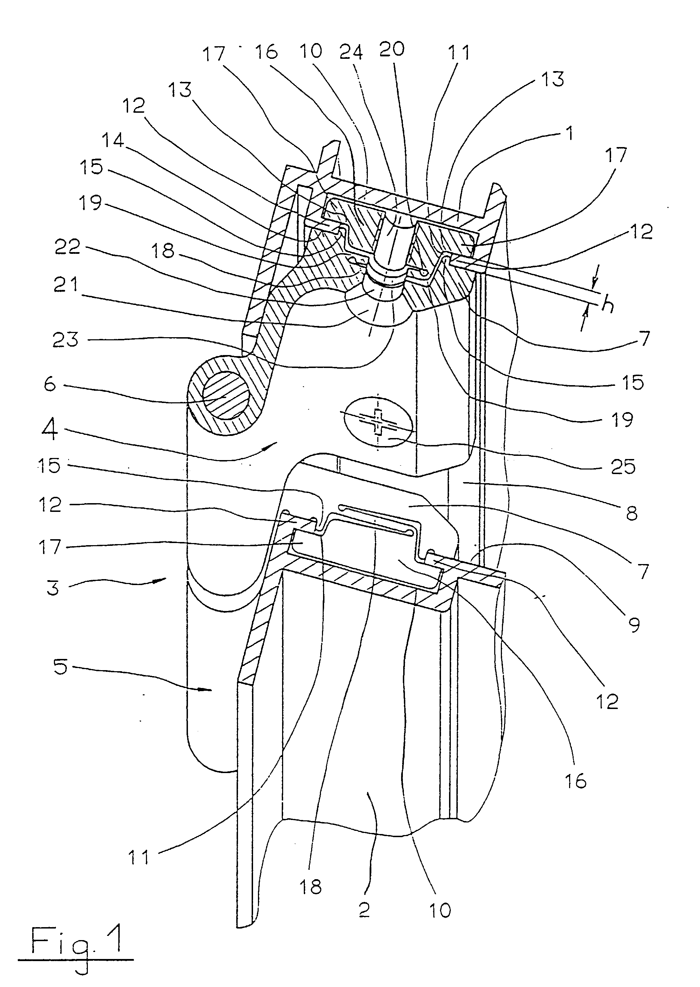

Gemäß **Fig. 1** ist ein Rahmen 1 eines Fensterflügels an einem Blendrahmen 2 mittels eines Scharnierbandes 3 schwenkbar angelenkt. Das Scharnierband 3 umfaßt ein flügelseitiges Beschlagteil in Form eines flügelseitigen Bandteils 4 sowie ein rahmenseitiges Beschlagteil in Form eines rahmenseitigen Bandteils 5. Die Bandteile 4, 5 sind über einen Achszapfen 6 relativ zueinander drehbar miteinander verbunden.

Beide Bandteile 4, 5 weisen eine Befestigungsplatte 7 auf, welche auf eine Falzfläche 8 am Rahmen 1 des Fensterflügels bzw. auf eine Falzfläche 9 des Blendrahmens 2 im Bereich einer hinterschnittenen Nut 10 ausgesetzt sind. Letztere besitzt einen T-förmigen Querschnitt. Eine Nutöffnung 11 wird von Querstegen 12 begrenzt, an deren Stirnflächen 13 jeweils ein von einer Anlagefläche 14 der Befestigungsplatten 7 ausgehender Zentrieransatz 15 anliegt. Der Zentrieransatz 15 sorgt für eine korrekte Ausrichtung der Bandteile 4, 5 an der jeweiligen Nut 10.

In jeder Nut 10 ist ein Klemmstück 16 angeordnet, das mit Klemmleisten 17 die Querstege 12 der Nut 10 hintergreift. Jedes Klemmstück 16 ist über einen Kupplungssteg 18 mit der zugeordneten Befestigungsplatte 7 verbunden. Dabei sind die Klemmstücke 16, die Befestigungsplatten 7 sowie die Kupplungsstege 18 einstückig ausgebildet und materialeinheitlich gefertigt. Anlenkstellen 19, an denen die Kupplungsstege 18 mit der jeweiligen Befestigungsplatte 7 sowie dem jeweiligen Klemmstück 16 verbunden sind, liegen im Bereich innerhalb der Nutöffnung 11 und weisen zur Gelenkbildung unter Schwächung der Stegdicke jeweils eine Ausnehmung 20 mit halbkreisförmigem Querschnitt auf. Auf diese Art und Weise ist der Kupplungssteg 18 sowohl mit der zugeordneten Befestigungsplatte 7 als auch mit dem zugeordneten Klemmstück 16 schwenkbeweglich verbunden, und es ergibt sich eine schwenkbare Lagerung des jeweiligen Klemmstücks 16 an der zugehörigen Befestigungsplatte 7.

Jede Befestigungsplatte 7 weist eine mit einer Senkung 21 versehene Durchgangsbohrung 22 auf, an die sich in Achsrichtung der Durchgangsbohrung 22 am Kupplungssteg 18 ein diesen querender Durchbruch 23 und am Klemmstück 16 eine Gewindebohrung 24 zur Aufnahme einer Spannschraube 25 anschließt.

Im Bereich einer Ecke des Rahmens 1 des Fensterflügels bzw. des Blendrahmens 2 sind an den Nuten 10 die Querstege 12 in Nutlängsrichtung unterbrochen. Auf diese Art und Weise entsteht eine öffnung, durch die das Klemmstück 16 in Richtung auf den Nutgrund in die Nut 10 eingeführt werden kann. Innerhalb der Nut 10 läßt sich das betreffende Klemmstück 16 längsverschieben, bis es die gewünschte Position am Rahmen 1 bzw. am Blendrahmen 2 erreicht hat. Zur Fixierung des Beschlagteils 4, 5 ist dann die jeweilige Spannschraube 25 zu betätigen und dadurch das Klemmstück 16 gegen die sich damit überdeckende Befestigungsplatte 7 zu ziehen, bis schließlich die Bandteile 4, 5 unter Einklemmen der Querstege 12 zwischen den Klemmleisten 17 der Klemmstücke 16 und den Anlageflächen 14 der Befestigungsplatten 7 am Rahmen 1 des Fensterflügels bzw. am Blendrahmen 2 fixiert sind.

Die Befestigungsplatten 7 mit den Bandteilen 4, 5, die Klemmstücke 16 und die jeweiligen Kupplungsstege 18 bilden einen zusammenhängenden, materialeinheitlichen Bauelementesatz, der im dargestellten Fall von einem nach dem Strangpreßverfahren hergestellten Profilstrang einer Aluminium-Legierung abgelängt worden ist.

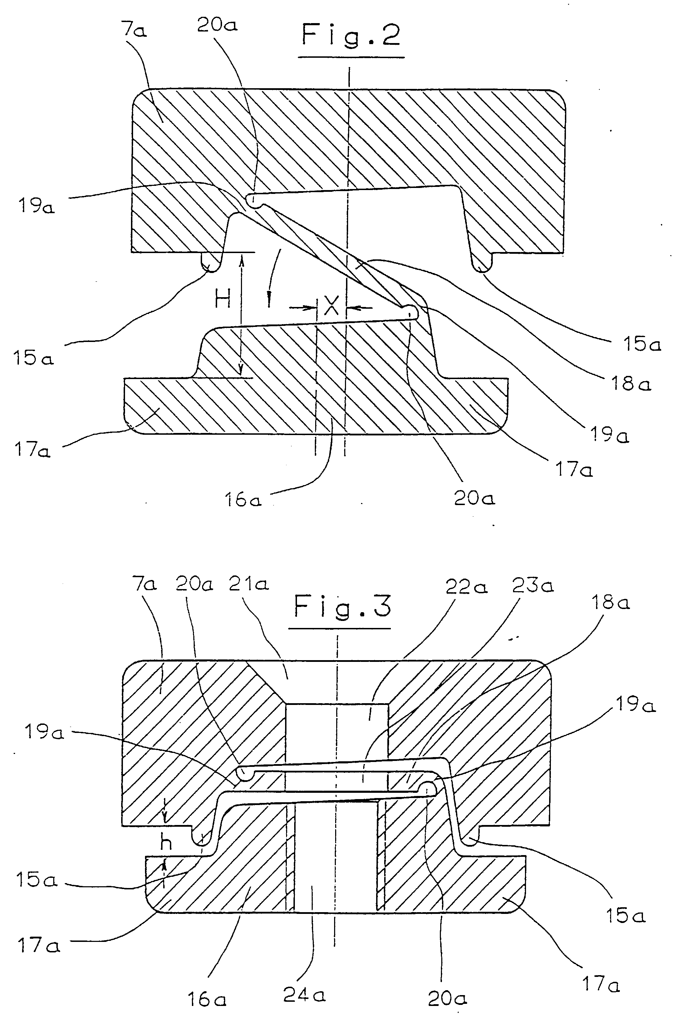

Zur Veranschaulichung der Herstellung eines derartigen Bauelementesatzes dienen die Fign. 2 und 3.

**Fig. 2** zeigt einen Profilstrang in derjenigen Form, in der er die Strangpreßdüse verlassen hat. Ein Klemmstück 16a und eine Befestigungsplatte 7a sind durch einen materialeinheitlichen Kupplungssteg 18a miteinander verbunden. Dieser ist sowohl gegen das Klemmstück 16a als auch gegen die Befestigungsplatte 7a unter einem spitzen Winkel geneigt angeordnet. Am Übergang des Kupplungsstegs 18a zum Klemmstück 16a sowie zur Befestigungsplatte 7a ist der Kupplungssteg 18a jeweils mit einer Ausnehmung 20a mit Halbkreisquerschnitt versehen. Auf diese Art und Weise werden drehgelenkartige Anlenkstellen 19a gebildet. Von der Befestigungsplatte 7a stehen zwei Zentrieransätze 15a vor. Das Klemmstück 16a ist mit zwei Klemmleisten 17a versehen.

Damit eine funktionsgerechte Ausgestaltung der Strangpreßdüse ermöglicht wird, sind das Klemmstück 16a und die Befestigungsplatte 7a relativ weit voneinander entfernt angeordnet. Der Abstand H zwischen der Befestigungsplatte 7a und der Klemmleiste 17a des Klemmstücks 16a beträgt ein Mehrfaches der Höhe der Querstege an der hinterschnittenen Nut, in welche das Klemmstück 17a einzusetzen ist. Dadurch wird eine ausreichende Wandstärke der Strangpreßdüse des Werkzeugs zwischen den Austrittsöffnungen für die Befestigungsplatte 7a, das Klemmstück 16a und den Kupplungssteg 18a gewährleistet. Im Beispielsfall entspricht der Abstand H in etwa dem Vierfachen der Querstegshöhe. Beim Abstand H sind die Befestigungsplatte 7a und das Klemmstück 16a um das Maß x seitlich gegeneinander versetzt. Übliche Höhen der Querstege liegen zwischen 1,5 mm und 3 mm; der Abstand der Austrittsöffnungen für die Befestigungsplatte 7a sowie das Klemmstück 16a am Strangpreßwerkzeug beträgt 5 mm bis 12 mm. Der Abstand h, bei dem die Teile des Beschlagelementesatzes in der nachstehend beschriebenen Art und Weise mit Öffnungen und Durchbrüchen versehen werden, kann die Höhe des einzuklemmenden Querstegs der Nut auch geringfügig übersteigen.

Um die Bohrungen für eine Spannschraube anbringen zu können, müssen das Klemmstück 16a und die Befestigungsplatte 7a einander soweit angenähert werden, bis sie an den Klemmleisten 17a des Klemmstücks 16a einen Abstand h voneinander einnehmen, der in etwa der Höhe der Querstege an der betreffenden Nut entspricht. Das Maß des seitlichen Versatzes an Befestigungsplatte 7 und Klemmstück 16a beträgt dann Null.

Wie aus Fig. 2 in Verbindung mit **Fig. 3** hervorgeht, wird zur Annäherung des Klemmstücks 16a an die Befestigungsplatte 7a der Kupplungssteg 18a um die klemmstückseitige Anlenkstelle 19a im Gegenuhrzeigersinn verschwenkt. Bei dieser Schwenkbewegung des Kupplungsstegs 18a verschiebt sich die Befestigungsplatte 7a gegenüber dem Klemmstück 16a in der Darstellung nach links. Gleichzeitig verringert sich der Neigungswinkel des Kupplungsstegs 18a gegenüber dem Klemmstück 16a sowie der Befestigungsplatte 7a. Sobald der Abstand h gemäß Fig. 3 erreicht ist, bei dem die Befestigungsplatte 7a, das Klemmstück 16a sowie der Kupplungssteg 18a ihre Einbaulage zueinander einnehmen und der Abstand zwischen der Klemmleisten 17a und der Befestigungsplatte 7a in etwa der Höhe der Querstege an der Nut entspricht, können an der Befestigungsplatte 7a eine mit einer Senkung 21a versehene Durchgangsbohrung 22a, am Kupplungssteg 18a ein Durchbruch 23a und am Klemmstück 16a eine Gewindebohrung 24a in einem Arbeitsgang hergestellt. werden. Dabei wird der Durchbruch 23a am Kupplungssteg 18a mit demselben Durchmesser gefertigt wie die Durchgangsbohrung 22a an der Befestigungsplatte 7a. Derselbe Bohrer dient dann auch noch zum Ansenken der Gewindebohrung 24a des Klemmstücks 16a.

Nach der beschriebenen Bearbeitung kann der Beschlagelementesatz in der abstandsverringerten Stellung gemäß Fig. 3 verbleiben. Zur Vereinfachung oer Montage kann der Beschlagelementesatz aber auch wieder etwas weiter aufgebogen werden, um dadurch das Einführen des Klemmstücks 16a in die Beschlagnut zu erleichtern.

Die Einstellung auf das Maß h und die Fertigung der Senkung 21a der Durchgangsbohrung 22a, des Durchbruchs 23a und/oder der Gewindebohrung 24a kann an einem Profilstrang großer Lange ebenso vorgenommen werden wie an vom Profilstrang abgelängten Bauelementesätzen. Die Spannschraube zur klemmenden Fixierung des Bauelementesatzes am betreffenden Rahmen ist bevorzugtermaßen bereits werksseitig vormontiert, um dadurch dem Verarbeiter die Montage des Beschlagelementesatzes weiter zu erleichtern.

Der Kupplungssteg 18a kann sich über die gesamte Länge des Bauelementesatzes erstrecken. Eine Anpassung an unterschiedliche Höhen der Querstege an den Nuten des Flügel- oder Blendrahmens wird durch die Schwenkbeweglichkeit des Kupplungsstegs 18a ermöglicht, die eine Parallelverschiebung von Befestigungsplatte 7a und Klemmstück 16a relativ zueinander erlaubt.

An Klemmvorichtungen, wie sie in den Fign. 1 bis 3 dargestellt sind, bewegt sich bei der Montage und der dabei erfolgenden Betätigung der Spannvorrichtung das Klemmstück 16, 16a relativ zu der Befestigungsplatte 7, 7a auf einer durch den Kupplungssteg 18, 18a festgelegten, definierten Bewegungsbahn. Demzufolge lassen sich die Befestigungsplatte 7, 7a sowie das Klemmstück 16, 16a relativ zueinander in eine definierte und funktionsgerechte Montage-Endlage bringen, in der sie in der gewünschten Art und Weise ausgerichtet sind und die Querstege der Beschlagteilnut wirksam klemmend beaufschlagen.

## Patentansprüche

1. Klemmvorrichtung zum Befestigen eines Beschlagteils (4) an einer wenigstens eine Hinterschneidung aufweisenden Nut (10) am Rahmen (1) eines Fensters, einer Tür od. dgl., wobei die Nutöffnung (11) von wenigstens einem mit Abstand vom Nutgrund angeordneten Quersteg (12) begrenzt ist, mit einem an der dem Nutgrund zugewandten Unterseite des Querstegs (12) abstützbaren Klemmstück (16, 16a), welches über einen Kupplungssteg (18, 18a) an wenigstens einer an der dem Klemmstück (16, 16a) abgewandten Seite des Querstegs (12) abstützbaren Befestigungsplatte (7, 7a) oder dergleichen relativ zu dieser schwenkbar gelagert ist, wobei Anlenkstellen (19, 19a) des Kupplungsstegs (18, 18a) an dem Klemmstück (16, 16a) und an der Befestigungsplatte (7, 7a) vorgesehen sind und der Kupplungssteg (18, 18a) gegenüber diesen Teilen geneigt angeordnet und zumindest begrenzt schwenkbeweglich ist und wobei die Befestigungsplatte (7, 7a) gegen das Klemmstück (16, 16a) mittels einer Spannvorrichtung spannbar ist, die eine eine Durchgangsbohrung (22,22a) der Befestigungsplatte (7, 7a) an letzterer abstützbar durchsetzende und in eine Aufnahmeausnehmung (24, 24a) des Klemmstücks (16, 16a) eindrehbare Spannschraube (25) umfaßt, dadurch gekennzeichnet, daß die Anlenkstellen (19, 19a) des Kupplungsstegs (18, 18a) an dem Klemmstück (16, 16a) und an der Befestigungsplatte (7, 7a) an deren einander zugewandten Seiten im Bereich innerhalb der Weite der Nutöffnung (11) angeordnet sind und der Kupplungssteg (18, 18a) mit einem Durchbruch (23, 23a) für die Spannschraube (25) versehen ist, welcher Durchbruch (23, 23a) in Einbaulage der Klemmvorrichtung mit der Durchgangsbohrung (22, 22a) der Befestigungsplatte (7, 7a) und mit der als Gewindebohrung (24, 24a) ausgeführten Aufnahmeausnehmung korrespondiert.

2. Klemmvorrichtung nach Anspruch 1, dadurch gekennzeichnet, daß der Kupplungssteg (18, 18a) am übergang zur Befestigungsplatte (7, 7a) und/oder zum Klemmstück (16, 16a) mit einer Querschnittsschwächung versehen ist.

3. Klemmvorrichtung nach einem der vorhergehenden Ansprüche, dadurch gekennzeichnet, daß die Querschnittsschwächung von einer im Kupplungssteg (18, 18a) vorgesehenen Ausnehmung (20, 20a) von halbkreisförmigem Querschnitt gebildet ist.

4. Klemmvorrichtung nach einem der vorhergehenden Ansprüche, dadurch gekennzeichnet, daß der Kupplungssteg (18, 18a) materialeinheitlich mit dem Klemmstück (16, 16a) und der Befestigungsplatte (7,7a) hergestellt ist.

5. Klemmvorrichtung nach einem der vorhergehenden Ansprüche, dadurch gekennzeichnet, daß der Kupplungssteg (18, 18a), das Klemmstück (16, 16a) und die Befestigungsplatte (7, 7a) einstükkig als Strangpreßprofil hergestellt sind.

6. Klemmvorichtung nach einem der vorhergehenden Ansprüche, dadurch gekennzeichnet, daß der Kupplungssteg (18, 18a) gemeinsam mit dem Klemmstück (16, 16a) und der Befestigungsplatte (7, 7a) einen Bauelementesatz bildet, welcher von einem Profilstrang abgelängt ist.

7. Klemmvorrichtung nach einem der vorhergehenden Ansprüche, dadurch gekennzeichnet, daß der Kupplungssteg (18, 18a) ebenso wie das Klemmstück (16, 16a) und die Befestigungsplatte (7, 7a) aus einer Aluminium-Legierung hergestellt ist.

8. Klemmvorrichtung nach einem der vorhergehenden Ansprüche, dadurch gekennzeichnet, daß an der Befestigungsplatte (7, 7a) wenigstens ein Zentrieransatz (15, 15a) zum Zusammenwirken mit einer zugeordneten Stirnfläche (13) des Querstegs (12) an der Nutöffnung (11) vorgesehen ist.

9. Verfahren zur Herstellung einer Klemmvorrichtung nach einem der vorhergehenden Ansprüche, dadurch gekennzeichnet, daß der Kupplungssteg (18, 18a), die Befestigungsplatte (7, 7a) und das Klemmstück (16, 16a) durch eine gemeinsame Düse zusammenhängend und materialeinheitlich in Form eines Profilstrangs stranggepreßt werden, daß vor oder nach dem anschließenden Abtrennen von aus einem Kupplungssteg (18, 18a), einer Befestigungsplatte (7, 7a) und einem Klemmstück (16, 16a) bestehenden Bauelementesätzen vom Profilstrang dieser bzw. die Bauelementesätze in diejenige Lage gebracht wird bzw. werden, in welcher der Kupplungssteg (18, 18a), die Befestigungsplatte (7, 7a) und das Klemmstück (16, 16a) bzw. die für diese Bauteile vorgesehenen Teile des Profilstrangs in etwa ihre Einbaulage zueinander einnehmen und daß dann für jeden Bauelementesatz in der Befestigungsplatte (7, 7a) eine insbesondere mit einer Senkung (21, 21a) versehene Durchgangsbohrung (22, 22a) für die Spannschraube (25) der Klemmvorrichtung, im Klemmstück (16, 16a) die Gewindebohrung (24, 24a) für die Spannschraube (25) und im Kupplungssteg (18, 18a) der Durchbruch (23, 23a) für die Spannschraube (25) hergestellt und abschließend die Spannschraube (25) eingedreht wird.

10. Verfahren nach Anspruch 9, dadurch gekennzeichnet, daß die Durchgangsbohrung (22, 22a), die Gewindebohrung (24, 24a) und der Durchbruch (23, 23a) für die Spannschraube (25) in einem Arbeitsgang gefertigt werden.

## Claims

1. Clamping device for fastening a fitting element (4) on a groove (10), having at leaet one undercut, on the frame (1) of a window, a door, or the like, the groove aperture (11) being delimited by at least one transverse web (12) arranged at a distance from the base of the groove, having a clamping member (16, 16a) which can be supported on the underside, facing the base of the groove, of the transverse web (12) and which is supported via a coupling member (18, 18a) on, and so that it is pivotablc relative to, at least one fastening plate (7, 7a), or the like, which can be supported on the side of the transverse web (12) remote from the clamping member (16, 16a), articulation points (19, 19a) for the coupling member (18, 18a) being provided on the clamping member (16, 16a) and on the fastening plate (7, 7a), the coupling member (18, 18a) being inclined relative to and pivotable to at least a limited extent relative to these parts, and the fastening plate (7, 7a) being capable of being tensioned against the clamping member (16, 16a) by means of a tensioning device comprising a tensioning screw (25) which extends through a through-bore (22, 22a) in the fastening plate (7, 7a), in such a manner that it is supportable on the fastening plate, and which can be screwed into a receiving recess (24, 24a) of the clamping member (16, 16a), characterised in that the articulation points (19, 19a) for the coupling member (18, 18a) are arranged on the clamping member (16, 16a) and on the fastening plate (7, 7a) on the sides thereof which face one another in the region inside the width of the groove aperture (11) and the coupling member (18, 18a) is provided with an opening (23, 23a) for the tensioning screw (25), which opening (23, 23a), when the clamping device has been mounted, corresponds with the through-bore (22, 22a) in the fastening plate (7, 7a) and with the receiving recess in the form of a tapped hole (24, 24a).

2. Clamping device according to Claim 1, characterised in that the coupling member (18, 18a) is reduced in cross-section at the junction with the fastening plate (7, 7a) and/or with the clamping member (16, 16a).

3. Clamping device according to any one of the preceding Claims, characterised in that the reduction in cross-section is in the form of a recess (20, 20a) of semi-circular cross-section provided in the coupling member (18, 18a).

4. Clamping device according to any one of the preceding Claims, characterised in that the coupling member (18, 18a) is manufactured from the same material as the clamping member (16, 16a) and the fastening plate (7, 7a).

5. Clamping device according to any one of the preceding Claims, characterised in that the coupling member (18, 18a), the clamping member (16, 16a) and the fastening plate (7, 7a) are manufactured integrally as an extruded section.

6. Clamping device according to any one of the preceding Claims, characterised in that the coupling member (18, 18a), along with the clamping member (16, 16a) and the fastening plate (7, 7a), forms a set of components which is cut to size from an extrusion.

7. Clamping device according to any one of the preceding Claims, characterised in that the coupling member (18, 18a) is manufactured from an aluminium alloy, as are the clamping member (16, 16a) and the fastening plate (7, 7a).

8. Clamping device according to any one of the preceding Claims, characterised in that the fastening plate (7, 7a) has at least one centring projection (15, 15a) for co-operation with an associated end face (13) of the transverse web (12) at the groove aperture (11).

9. Method for manufacturing a clamping device according to any one of the preceding Claims, characterised in that the coupling member (18, 18a), the fastening plate (7, 7a) and the clamping member (16, 16a) are extruded to form an extrusion, continuously and from the same material, by a common extruder die, in that, before or after the subsequent separation of sets of components, comprising a coupling member (18, 18a), a fastening plate (7, 7a) and a clamping member (16, 16a), from the extrusion, the extrusion or the sets of components, as the case may be, is/are moved to the position in which the coupling member (18, 18a), the fastening plate (7, 7a) and the clamping member (16, 16a), or the portions of the extrusion provided for those components, approximately occupy their mounted position relative to one another, and in that, for every set of components, a through-bore (22, 22a), especially having a counter-sunk portion (21, 21a), in the fastening plate (7, 7a) for the tensioning screw (25) of the clamping device, the tapped hole (24, 24a) in the clamping member (16, 16a) for the tensioning screw (25) and the opening (23, 23a) in the coupling member (18, 18a) for the tensioning screw (25) are then produced and, finally, the tensioning screw (25) is screwed in.

10. Method according to Claim 9, characterised in that the through-bore (22, 22a), the tapped hole (24, 24a) and the opening (23, 23a) for the tensioning screw (25) are produced in one pass.

## Revendications

1. Dispositif de serrage pour fixer une partie de ferrure (4) à une rainure (10) présentant au moins un élargissement intérieur ou rentrant et située sur le cadre (1) d'une fenêtre, d'une porte ou analogue, l'ouverture de la rainure (11) étant délimitée par au moins une nervure transversale (12) disposée à distance du fond de rainure, dispositif qui comprend une pièce de serrage (16, 16a) pouvant prendre appui sur le dessous de la nervure transversale (12), dirigé vers le fond de rainure, et qui est supportée par l'intermédiaire d'une entretoise de couplage (18, 18a) sur au moins une plaque de fixation (7, 7a) ou analogue de manière à pouvoir pivoter par rapport à celle-ci, la plaque de fixation pouvant prendre appui sur le côté de la nervure transversale (12) éloigné de la pièce de serrage (16, 16a), avec prévision de points d'attache articulée (19, 19a) de l'entretoise de couplage (18, 18a) sur la pièce de serrage (16, 16a) et sur la plaque de fixation (7, 7a), et l'entretoise de couplage (18, 18a) étant disposée inclinée par rapport à ces pièces et étant au moins mobile en pivotement dans une mesure limitée, la plaque de fixation (7, 7a) pouvant être bloquée contre la pièce de serrage (16, 16a) au moyen d'un dispositif de blocage qui comprend une vis de blocage (25) traversant un trou de passage (22, 22a) de la plaque de fixation (7, 7a), avec la possibilité de prendre appui sur cette dernière, et peut être vissée dans un évidement récepteur (24, 24a) de la pièce de serrage (16, 16a), caractérisé en ce que les points d'attache articulée (19, 19a) de l'entretoise de couplage (18, 18a) sont agencés sur les côtés dirigés l'un vers l'autre de la pièce de serrage (16, 16a) et de la plaque de fixation (7, 7a) dans la région comprise dans la largeur de l'ouverture de rainure (11), et l'entretoise de couplage (18, 18a) est pourvue d'un ajour (23, 23a) pour la vis de blocage (25), ajour (23, 23a) qui, à la position installée du dispositif de serrage, correspond au trou de passage (22, 22a) de la plaque de fixation (7, 7a) et à l'évidement récepteur, réalisé sous la forme d'un trou fileté (24, 24a).

2. Dispositif de serrage selon la revendication 1, caractérisé en ce que l'entretoise de couplage (18, 18a) est pourvue d'une réduction de section à la transition avec la plaque de fixation (7, 7a) et/ou la pièce de serrage (16, 16a).

3. Dispositif de serrage selon une des revendications précédentes, caractérisé en ce que la réduction de section est formée par une encoche (20, 20a), de section semi-circulaire, prévue dans l'entretoise de couplage (18, 18a).

4. Dispositif de serrage selon une des revendications précédentes, caractérisé en ce que l'entretoise de couplage (18, 18a) est fabriquée du même matériau que la pièce de serrage (16, 16a) et la plaque de fixation (7, 7a).

5. Dispositif de serrage selon une des revendications précédentes, caractérisé en ce que l'entretoise de couplage (18, 18a), la pièce de serrage (16, 16a) et la plaque de fixation (7, 7a) sont fabriquées d'un seul tenant comme un profilé filé à la presse.

6. Dispositif de serrage selon une des revendications précédentes, caractérisé en ce que l'entretoise de couplage (18, 18a) forme, conjointement avec la pièce de serrage (16, 16a) et la plaque de fixation (7, 7a), un ensemble de composants qui est tronçonné d'une barre profilée.

7. Dispositif de serrage selon une des revendications précédentes, caractérisé en ce que l'entretoise de couplage (18, 18a) est fabriquée, comme la pièce de serrage (16, 16a) et la plaque de fixation (7, 7a), d'un alliage d'aluminium.

8. Dispositif de serrage selon une des revendications précédentes, caractérisé en ce qu'au moins une protubérance de centrage (15, 15a) est prévue sur la plaque de fixation (7, 7a) pour coopérer avec une face extrême (13) coordonnée de la nervure transversale (12) sur l'ouverture de rainure (11).

9. Procédé pour fabriquer un dispositif de serrage selon une des revendications précédentes, caractérisé en ce que l'entretoise de couplage (18, 18a), la plaque de fixation (7, 7a) et la pièce de serrage (16, 16a) sont filées à la presse, à travers une filière commune, en étant attachées entre elles et faites du même matériau, sous la forme d'une barre profilée, en ce que, avant ou après le tronçonnage consécutif d'ensembles de composants de la barre profilée, ensembles qui sont constitués chacun d'une entretoise de couplage (18, 18a), d'une plaque de fixation (7, 7a) et d'une pièce de serrage (16, 16a), l'ensemble ou les ensembles de composants est amené ou sont amenés à la position dans laquelle l'entretoise de couplage (18, 18a), la plaque de fixation (7, 7a) et la pièce de serrage (16, 16a), ou les parties de la barre profilée prévues pour ces composants, occupent à peu près leur position installée l'une par rapport à l'autre et que, ensuite, pour chaque ensemble de composants, le trou de passage (22, 22a) pour la vis de blocage (25) du dispositif de serrage, trou qui est en particulier muni d'un chanfrein d'entrée (21, 21a), est réalisé dans la plaque de fixation (7, 7a), le trou fileté (24, 24a) pour la vis de blocage (25) est réalisé dans la pièce de serrage (16, 16a) et l'ajour (23, 23a) pour la vis de blocage (25) est réalisé dans l'entretoise de couplage (18, 18a), la vis de blocage (25) étant mise en place pour terminer.

10. Procédé selon la revendication 9, caractérisé en ce que le trou de passage (22, 22a), le trou fileté (24, 24a) et l'ajour (23, 23a) pour la vis de blocage (25) sont réalisés en une seule opération.
